# FASCICULE DE BREVET EUROPEEN

(11) **EP 3 732 531 B1**
(45) Date de publication et mention de la délivrance du brevet: **03.11.2021**
(21) Numéro de dépôt: 18833486.6
(22) Date de dépôt: 17.12.2018
(51) Int. Cl.: G02B 27/62, G02B 6/26

(54) **DISPOSITIF OPTIQUE DISPOSANT DE MOYENS POUR SON ASSEMBLAGE PRÉCIS, PROCÉDÉ D'ASSEMBLAGE OU DE TEST DE CE DISPOSITIF**
OPTISCHE VORRICHTUNG MIT MITTELN ZUR PRÄZISEN MONTAGE DERSELBEN, ANORDNUNG ODER TESTVERFAHREN FÜR DIESE VORRICHTUNG
OPTICAL DEVICE POSSESSING MEANS FOR THE PRECISE ASSEMBLY THEREOF, ASSEMBLY OR TEST METHOD FOR SAID DEVICE

(30) Priorité: 28.12.2017 FR 1763315
(43) Date de publication de la demande: 04.11.2020
(73) Titulaire: Cailabs, 35200 Rennes (FR)
(72) Inventeur: LABROILLE, Guillaume, 35000 RENNES (FR); BARRE, Nicolas, 35700 RENNES (FR)
(74) Mandataire: IP Trust
(86) Numéro de dépôt international: PCT/FR2018/053325
(87) Numéro de publication internationale: WO 2019/129949

(56) Documents cités:
- WO-A1-2016/110667
- WO-A1-2017/158261
- US-A1- 2014 320 672
- BARRE NICOLAS ET AL: "Broadband, mode-selective 15-mode multiplexer based on multi-plane light conversion", 2017 OPTICAL FIBER COMMUNICATIONS CONFERENCE AND EXHIBITION (OFC), OSA, 19 mars 2017 (2017-03-19), pages 1-3, XP033101011, DOI: 10.1364/OFC.2017.TH2A.7

## Description

### DOMAINE DE L'INVENTION

La présente invention concerne un dispositif optique de manipulation d'un rayonnement lumineux. Elle concerne plus particulièrement un tel dispositif disposant de moyens permettant son assemblage précis, ou de manière plus générale, le positionnement relatif précis des pièces optiques qui le compose. Ces moyens peuvent être mis en œuvre au cours de l'assemblage du dispositif ou pour vérifier sa bonne fonctionnalité pendant de son exploitation.

### ARRIERE PLAN TECHNOLOGIQUE DE L'INVENTION

On connaît de US9250454 et US2017010463 des dispositifs optiques, désignés par l'acronyme MPLC (Multi Plane Light Conversion selon l'expression anglo-saxonne), permettant de réaliser toute transformation spatiale unitaire d'un rayonnement lumineux.

D'un point de vue théorique, et comme cela a été établi dans « Programmable unitary spatial mode manipulation », Morizur et Al, J. Opt. Soc. Am. A/Vol. 27, No. 11/November 2010*,* une transformation spatiale unitaire peut effectivement être décomposée en une succession de transformations primaires, chaque transformation primaire affectant le profil de phase transverse du rayonnement lumineux. Dans la pratique, et sans que cela ne forme une limitation quelconque de cette technologie, les composants MPLC appliquent typiquement entre 3 à 25 transformations primaires.

Le document « G. Labroille, P. Jian, N. Barré, B. Denolle, and J. Morizur, "Mode Selective 10-Mode Multiplexer based on Multi-Plane Light Conversion," in Optical Fiber Communication Conference, OSA Technical Digest (online) (Optical Society of America, 2016), paper Th3E.5. » divulgue un mode de mise en œuvre particulier d'un dispositif MPLC. Il comprend un support sur lequel on a disposé un étage d'entrée permettant de guider l'injection dans le dispositif d'un rayonnement lumineux incident, un étage de sortie pour guider l'extraction du dispositif du rayonnement lumineux transformé, un miroir disposé en vis-à-vis d'un élément optique réfléchissant pour former une cavité multi passage et permettre de réfléchir une pluralité de fois sur l'élément optique le rayonnement lumineux incident. L'élément optique présente une face principale microstructurée pour appliquer, à chaque réflexion du rayonnement incident, une modification du profil transverse de phase du signal.

Les pièces constituant un tel dispositif doivent être positionnées et orientées les unes relativement aux autres avec une très grande précision. Cette précision est nécessaire pour assurer que le rayonnement lumineux incident intercepte l'élément optique précisément au niveau de la zone microstructurée, afin de lui impartir une transformation choisie. Ce besoin de précision dans l'agencement des pièces optiques composant le dispositif est d'autant plus vrai qu'une même pièce peut intercepter plusieurs fois le chemin optique du rayonnement incident (typiquement entre 3 et 25 fois comme on vient de l'énoncer), si bien qu'un écart de positionnement ou d'orientation minime vis-à-vis du positionnement requis peut avoir une grande incidence sur le bon fonctionnement du dispositif.

Par ailleurs, les tolérances optiques de positionnement (de l'ordre du micromètre et du microradian pour ce qui concerne la précision angulaire) sont bien plus réduites que les tolérances géométriques de fabrication des pièces (du moins si l'on recherche des pièces pouvant être produites avec un cout raisonnable), si bien que la position de ces pièces, dans leurs positions d'assemblage, ne peut être généralement établie à l'avance avec la précision nécessaire.

Pour assembler les pièces au support, et notamment pour constituer la cavité multi passage, on positionne d'abord grossièrement l'étage d'entrée, le miroir et l'élément optique en vis-à-vis l'un de l'autre. On injecte un rayonnement lumineux incident dans la cavité ainsi formée, et on détecte l'intensité du signal lumineux en sortie de la cavité. On ajuste aussi finement que possible la position et l'orientation relatives de l'étage d'entrée, du miroir et de l'élément optique selon tous les degrés de liberté disponibles pour optimiser l'intensité détectée. Ce positionnement et cette orientation relatifs optimaux sont temporairement figés, par exemple à l'aide de pinces ajustables de maintien.

On utilise ensuite des cubes d'alignement (ou plus généralement des pièces d'alignement) présentant des faces planes et présentant des faces jointives perpendiculaires entre elles, pour fixer par l'intermédiaire d'une couche de colle l'étage d'entrée, le miroir et l'élément optique dans leurs positions optimales au support.

La qualité de l'alignement optique de l'assemblage, et notamment celle de la cavité, est au moins en partie déterminée par le positionnement et l'orientation relatifs des pièces entre elles, réalisés en se fondant sur la détection de l'intensité du signal lumineux de sortie. Bien que cette approche ait montré son efficacité, cette méthodologie conduit à un positionnement et une orientation relative des pièces qui peut encore être améliorée.

Il serait également souhaitable de pouvoir évaluer le bon agencement des pièces optiques entre elles au cours de l'exploitation du produit, pour simplement vérifier son bon fonctionnement ou permettre de compenser des écarts de positionnement ou d'orientation qui se seraient produits.

### BREVE DESCRIPTION DE L'INVENTION

En vue de la réalisation de l'un au moins de ces buts, l'objet de l'invention propose un dispositif optique formé d'une pluralité de pièces optiques disposée sur un support dont au moins un élément optique présentant une face principale munie d'une première zone microstructurée pour intercepter un rayonnement lumineux incident qui se propage le long d'un premier chemin optique déterminé, la première zone microstructurée modifiant spatialement la phase du rayonnement lumineux incident selon un profil spatial déterminé et pour former, par une pluralité de réflexions ou de transmissions sur le ou les élément(s) optique(s), un rayonnement lumineux transformé.

Selon l'invention, le dispositif optique comprend un étage d'entrée pour guider l'injection d'un rayonnement lumineux de positionnement, selon un deuxième chemin optique. La surface principale de l'élément optique comporte une deuxième zone texturée configurée pour réfléchir le rayonnement lumineux de positionnement et rétro propager le rayonnement de positionnement le long du deuxième chemin optique.

Toute déviation, même de faible amplitude, du positionnement ou de l'orientation d'une des pièces optiques, affecte la propagation du rayonnement rétro propagé et la puissance du rayonnement qui peut être collecté au niveau de l'étage d'entrée. Cette mesure très sensible permet d'assurer le positionnement très précis des pièces à positionner.

Selon d'autres caractéristiques avantageuses et non limitatives de l'invention, prises seules ou selon toute combinaison techniquement réalisable :
- le dispositif optique comprend un étage de sortie du rayonnement lumineux transformé ;
- le rayonnement lumineux incident est injecté par l'étage d'entrée ;
- le rayonnement lumineux transformé est extrait par l'étage d'entrée (3) ;
- l'élément optique est transparent au rayonnement lumineux incident, et le rayonnement transformé est formé, au moins en partie, par transmission du rayonnement incident à travers l'élément optique transparent ;
- l'élément optique est réfléchissant, et le rayonnement transformé est formé, au moins en partie, par réflexion du rayonnement lumineux incident sur l'élément optique réfléchissant ;
- le dispositif optique comprend un miroir disposé en vis-à-vis de l'élément optique réfléchissant pour former une cavité multi passage et permettre de projeter une pluralité de fois le rayonnement lumineux incident et le signal lumineux de positionnement respectivement le long du premier et du deuxième chemin optique ;
- la deuxième zone microstructurée est configurée pour appliquer une transformation au rayonnement de positionnement au cours des réflexions ou des transmissions précédant la réflexion de rétro-propagation ;
- l'élément optique est une lame de phase, un miroir déformable, ou un modulateur spatial de lumière ;
- le support est un support plan ou un châssis ;
- l'étage d'entrée comprend au moins une fibre optique de positionnement pour injecter le rayonnement de positionnement.

Selon un autre aspect, l'invention propose un système d'assemblage ou de test du dispositif optique, le système comprenant une source de lumière optiquement reliée à la fibre optique de positionnement et un dispositif de mesure de la puissance du rayonnement lumineux rétro propagé.

Selon d'autres caractéristiques avantageuses et non limitatives de cet aspect de l'invention, prises seules ou selon toute combinaison techniquement réalisable :
- le système d'assemblage ou de test comprend un circulateur et/ou un séparateur entre la source de lumière et la fibre optique de positionnement pour extraire le rayonnement lumineux rétro propagé vers le dispositif de mesure ;

Et selon un autre aspect, l'invention propose un procédé d'évaluation du dispositif optique comprenant les étapes suivantes :
a. injecter un rayonnement lumineux de positionnement dans le dispositif optique par l'intermédiaire de l'étage d'entrée ;
b. mesurer la puissance du signal rétro propagé.

Selon d'autres caractéristiques avantageuses et non limitatives de ce procédé, prises seules ou selon toute combinaison techniquement réalisable :
- le procédé d'évaluation comprend une étape de détermination de l'état de fonctionnement du dispositif optique selon la valeur de la puissance mesurée ;
- le procédé d'évaluation comprend une étape visant à placer temporairement les pièces optiques relativement les unes par rapport aux autres,, avant d'injecter le rayonnement lumineux de positionnement ;
- le procédé d'évaluation comprend :
   ∘ une étape d'ajustement du placement relatif des pièces optiques pour atteindre une mesure cible de la puissance ou pour maximiser la mesure de la puissance et établir une position et une orientation déterminées;
   ∘ une étape pour figer le placement relatif des pièces optiques entre elles dans la position et l'orientation déterminées ;
- l'étape de placement temporaire comprend la fixation définitive de l'élément optique sur un support plan.

### BREVE DESCRIPTION DES DESSINS

D'autres caractéristiques et avantages de l'invention ressortiront de la description détaillée de l'invention qui va suivre en référence aux figures annexées sur lesquels :
- la figure 1 représente un mode de mise en œuvre préférée d'un dispositif optique 1 conforme à l'invention ;
- la figure 2 représente une face principale d'une lame de phase formant un élément optique du mode de mise en œuvre préféré de la figure 1 ;
- la figure 3 représente schématiquement en vue de dessus un système d'assemblage ou de test d'un dispositif optique 1 conforme à l'invention ;
- la figure 4 représente schématiquement en vue de dessus une autre configuration du système d'assemblage ou de test d'un dispositif optique 1 conforme à l'invention.

### DESCRIPTION DETAILLEE DE L'INVENTION

Par souci de simplification de la description à venir, les mêmes références sont utilisées pour des éléments identiques ou assurant la même fonction dans les différentes variantes du dispositif décrit.

Par souci de clarté, on définit dans la présente demande un rayonnement lumineux comme un rayonnement formé d'au moins un mode du champ électromagnétique, chaque mode formant une distribution spatio-fréquentielle de l'amplitude, de la phase, de la polarisation du champ.

En conséquence, la modification ou la transformation de la phase du rayonnement lumineux désigne la modification ou la transformation spatio-fréquentielle de chacun des modes du rayonnement.

On désignera par « forme » d'un rayonnement la distribution transverse de l'amplitude et de la phase du mode ou la combinaison des distributions transverses d'amplitude et de phase des modes composant ce rayonnement.

Par souci de simplification, on considèrera dans la présente description que le rayonnement est polarisé selon une unique direction et présente une unique fréquence. Toutefois les principes exposés sont tout à fait applicables à un rayonnement présentant plus d'une direction de polarisation ou plus d'une unique fréquence.

D'une manière très générale, un dispositif optique 1 conforme à l'invention est composé d'un ensemble de pièces optiques configurées pour manipuler un rayonnement lumineux incident et former un rayonnement lumineux transformé, cette manipulation comprenant la modification contrôlée du profil de phase transverse du rayonnement lumineux incident, au cours d'une pluralité de transformations primaires qui contribuent, en combinaison, à opérer une fonction optique déterminée. Il peut s'agir d'opérer 4 transformations primaires ou plus (par réflexion et/ou transmission), comme par exemple 8, 10, 12, 14, voire 20 transformations élémentaires ou plus.

Cette fonction optique déterminée peut correspondre à un multiplexage ou à un démultiplexage spatial du rayonnement incident ou, plus généralement encore, à toute manipulation modale de ce rayonnement incident. Avantageusement, la forme du rayonnement lumineux incident et du rayonnement lumineux transformés sont différentes l'une de l'autre.

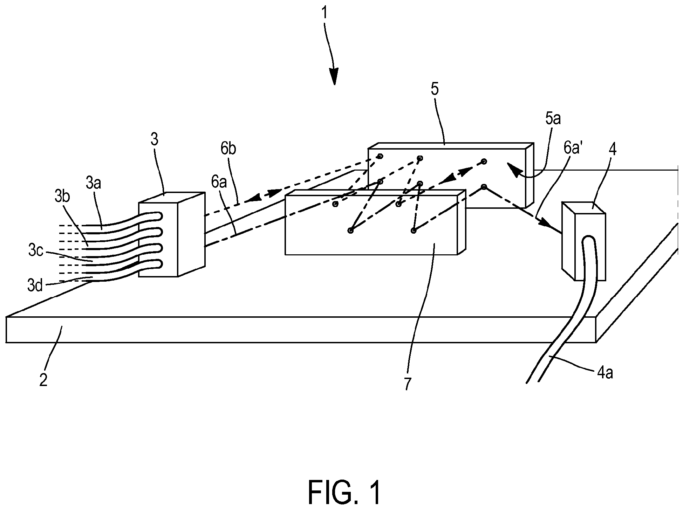

La figure 1 représente un mode de mise en œuvre préféré d'un dispositif optique 1 conforme à l'invention.

Le dispositif optique 1 comprend, assemblé à un support 2, un étage d'entrée 3 pour guider l'injection du rayonnement lumineux incident. Dans une alternative, le rayonnement lumineux est injecté dans le dispositif 1 par simple propagation dans l'espace libre, à partir d'une source lumineuse telle qu'une source laser. On notera également que le support 2 n'est pas nécessairement un support plan, il peut s'agir d'un châssis sur lequel les différentes pièces optiques du dispositif 1 sont fixées, éventuellement de manière à pouvoir ajuster leurs positions et/ou orientations.

Le dispositif optique 1 comprend un élément optique 5 également assemblé au support 2. L'élément optique 5 et l'étage d'entrée 3 (ou la source de lumière lorsque le rayonnement est injecté par propagation libre) sont disposés l'un par rapport à l'autre dans une position et une orientation relatives pour lesquelles le rayonnement incident lumineux se propage pour se projeter sur une face principale 5a de l'élément optique 5, le long d'un premier chemin optique 6a. L'élément optique 5 a pour fonction d'impartir la fonction optique déterminée au rayonnement lumineux incident.

Dans l'exemple représenté sur la figure 1, l'élément optique 5 est réfléchissant. Un miroir 7 est disposé avec une grande précision en vis-à-vis de l'élément optique 5, pour former une cavité multi passage. Le rayonnement lumineux incident 6a issu de l'étage d'entrée 3 se réfléchit une pluralité de fois sur la face principale 5a de l'élément optique 5 et sur la face opposée du miroir 6.

### Etage d'entrée

Dans l'exemple représenté sur la figure 1, l'étage d'entrée 3 comprend un faisceau de fibres optiques 3a, 3b, 3c, 3d, disposées linéairement et avec précision les unes par rapport aux autres selon une direction perpendiculaire au support 2. On pourrait toutefois, et sans sortir du cadre de la présente invention, envisager de disposer le faisceau de fibres selon une autre configuration.

Chaque fibre optique permet d'injecter un rayonnement lumineux dans le dispositif optique 1. Au moins un de ces rayonnements, désigné par la suite comme le « rayonnement de positionnement » est injecté dans le dispositif optique 1 par au moins une fibre optique de positionnement de l'étage d'entrée. Ce rayonnement de positionnement est destiné à être utilisé pour permettre le positionnement avec grande précision des pièces du dispositif optique 1, son assemblage, son test ou son diagnostic fonctionnel. Dans l'exemple représenté sur la figure 1, d'autres rayonnements, désignés par la suite comme le rayonnement incident, sont injectés dans le dispositif optique par au moins une fibre optique d'injection de l'étage d'entrée 3. Ce rayonnement incident est destiné à être manipulé et transformé par le dispositif optique 1.

Chaque fibre optique présente une extrémité d'émission orientée vers l'élément optique 5. Cette extrémité peut être munie d'une micro lentille, permettant de collimater le rayonnement lumineux et contrôler sa propagation dans le dispositif optique 1. Chaque micro lentille peut être intégrée à l'étage d'entrée 3 ou assemblée à cet étage, en vis-à-vis de chacune des extrémités d'émission des fibres 3a, 3b, 3c, 3d. L'autre extrémité des fibres optiques de l'étage d'entrée est connectable à une source de lumière ou à l'extrémité d'une autre fibre optique dans laquelle se propage un rayonnement lumineux utile que l'on souhaite manipuler à l'aide du dispositif optique 1.

Les fibres optiques de l'étage d'entrée peuvent être monomode ou multimode. Un étage d'entrée peut comprendre un nombre quelconque de fibres optiques, typiquement de 1 à plusieurs dizaines. Préférentiellement toutefois, la ou les fibre(s) de positionnement est (sont) monomode.

L'étage d'entrée 3, ainsi que toutes les autres pièces optiques disposées sur le support 2 peuvent être assemblés par collage, dans leur position d'assemblage, au support 2. On peut prévoir d'utiliser des pièces d'alignement, comme cela a été présenté dans le préambule de cette demande, de manière à figer le positionnement et l'orientation de chacune des pièces optiques au support avec une grande précision et une grande robustesse. Par souci de visibilité de la figure 1, les pièces d'alignements n'y ont pas été représentées. Alternativement, les pièces optiques peuvent être maintenues en position vis-à-vis du support 2, par l'intermédiaire de moyens de maintien, ces moyens pouvant éventuellement permettre de déplacer ces pièces relativement les unes par rapport aux autres.

### Etage de sortie

Comme cela a déjà été exposé préalablement, un rayonnement incident 6a qui peut être issu de l'étage d'entrée 3 est manipulé et transformé au cours de ces réflexions successives sur l'élément optique 5. Le rayonnement lumineux transformé 6a' ressort de la cavité multi passage pour atteindre un étage de sortie 4 du dispositif optique 1. Cet étage de sortie 4 permet de coupler le rayonnement transformé 6a' à une fibre optique de sortie 4a afin de guider l'extraction du rayonnement lumineux transformé du dispositif 1, en vue de sa transmission et/ou de son traitement.

Bien entendu, le positionnement de cet étage de sortie 4 au support doit également être réalisé avec une grande précision, afin de permettre ce couplage le plus parfaitement possible. La position et l'orientation de l'étage de sortie 4 sur le support 2 peuvent toutefois être réalisés dans un second temps, et indépendamment du positionnement de l'étage d'entrée et des pièces formant la cavité multi passage au support 2.

Selon la fonction opérée par le dispositif optique 1, l'étage de sortie 4 peut comprendre une pluralité de fibres de sortie 4a, chacune étant prévue pour recevoir le rayonnement lumineux transformé 6a' ou une partie de celui-ci. Par exemple, lorsque le dispositif optique 1 est conçu pour opérer un démultiplexage spatial, chaque mode du rayonnement lumineux incident 6a est spatialement isolé par l'élément optique 5 de la cavité multi passage, et chaque mode isolé du rayonnement transformé 6a' se propage avec précision au niveau de la section d'extrémité d'une fibre de sortie 4a, pour s'y coupler optiquement et s'y propager.

Les fibres optiques de l'étage de sortie 4 peuvent être monomode ou multimode.

On notera que l'étage de sortie 4 n'est pas un élément essentiel à l'invention, et qu'il est possible que le rayonnement lumineux transformé soit extrait du dispositif 1 par propagation en espace libre.

### Elément optique microstructuré.

Comme cela vient d'être énoncé, l'élément optique microstructuré 5 (également plus simplement désigné « élément optique » dans la présente description) opère la transformation du rayonnement incident 6a en un rayonnement transformé 6a'. À cet effet, la face principale 5a sur lequel se projette une pluralité de fois le rayonnement lumineux incident 6a comprend une première zone microstructurée. Cette zone microstructurée modifie spatialement la phase transverse du rayonnement lumineux incident 6a selon un profil spatial déterminé.

On pourra se référer aux différents documents cités de l'état de la technique pour bien comprendre comment la transformation répétée de la phase spatiale du rayonnement incident 6a permet d'opérer une transformation choisie du rayonnement lumineux incident et comment on peut concevoir l'élément optique 5 pour qu'il mette en œuvre une telle transformation. On se refera également à ces documents pour obtenir des exemples des méthodes de conception numériques des microstructures disposées sur la face principale 5a de l'élément optique 5. Le modèle numérique de ces microstructures peut être employé pour fabriquer l'élément optique, par exemple par usinage, moulage et/ou gravure d'une pièce optique brute.

Par « face ou surface microstructurée» on signifie, à titre d'exemple, que la face ou la surface peut présenter des « pixels » dont les dimensions sont comprises entre quelques microns à quelques centaines de microns. Chaque pixel présente une élévation, par rapport à un plan moyen définissant la face ou la surface en question, d'au maximum quelques microns ou d'au maximum quelques centaines de microns.

Dans le cas de l'exemple préféré illustré sur la figure 1, l'élément optique 5 est une lame de phase réfléchissante. En combinaison avec la surface réfléchissante du miroir 7, la face principale 5a est suffisamment étendue pour qu'une pluralité de réflexions du rayonnement incident 6a s'y opère.

De nombreuses variantes à cette configuration en cavité multi passage sont toutefois possibles, sans sortir du cadre de la présente invention.

On pourrait ainsi envisager que le dispositif optique 1 comprenne une pluralité d'éléments optiques 5, par exemple une pluralité de lames de phases réfléchissantes juxtaposées les unes aux autres. Cette pluralité d'éléments optiques 5 peut-être disposée sur le support pour former un premier chemin optique complexe, par exemple pour rechercher à rendre le dispositif optique très compact. Dans cette variante, le miroir 7 de la cavité multi passage peut être remplacé par une deuxième lame de phase réfléchissante microstructurée, pour doubler le nombre de transformations primaires opérées sur le rayonnement incident 6a ou permettre, pour un nombre de réflexions données, de former une cavité multi passage deux fois plus compact.

Selon une autre variante, l'élément optique 5 n'est pas réfléchissant, mais transparent. On peut ainsi prévoir qu'un élément optique microstructuré 5 transparent, par exemple placé dans une cavité optique formée par deux miroirs placés en vis-à-vis l'un de l'autre, puisse intercepter une pluralité de fois le premier chemin optique 6a du rayonnement lumineux incident pour y opérer les transformations. Il peut alternativement s'agir d'une pluralité d'éléments optiques transparents 5, disposés les uns derrière les autres le long du premier chemin optique.

On peut également envisager de combiner un ou plusieurs éléments optiques 5 transparents avec un ou plusieurs éléments optiques 5 réfléchissants. D'autres pièces optiques, telles que des miroirs, des prismes peuvent également être placés le long du premier chemin optique, selon le besoin.

La configuration illustrée sur la figure 1 comprenant la cavité multi passage formé d'un élément optique 5 et d'un miroir s'est toutefois montré être une configuration préférée formant un bon compromis entre le niveau de performance, la versatilité des transformations qu'elle peut opérer, et la facilité de son assemblage.

### Moyens de positionnement

Selon l'invention, le dispositif optique 1 est configuré pour qu'un rayonnement lumineux de positionnement 6b soit également injecté dans la cavité multi passage, le long d'un deuxième chemin optique 6b. L'injection de ce rayonnement de positionnement peut-être notamment utile, comme cela sera exposé ultérieurement, lors du positionnement des pièces optiques, par exemple au cours de l'assemblage du dispositif 1 et/ou pour son diagnostic en fin de ligne de montage ou sur le terrain.

Pour permettre cette injection, l'étage d'entrée 3 comprend au moins une fibre de positionnement dédiée à l'injection du rayonnement de positionnement.

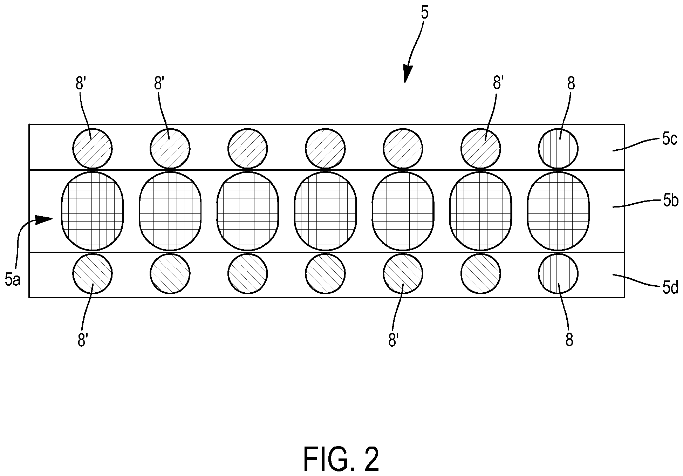

La surface principale 5a de l'élément optique 5 est également pourvue d'une deuxième zone microstructurée 5c, 5d interceptant au moins une fois le deuxième chemin optique 6b. Cette deuxième zone microstructurée 5c, 5d a au moins pour fonction de réfléchir le rayonnement lumineux de positionnement 6b pour le rétro propager le long du deuxième chemin optique, en direction de l'étage d'entrée 3. A cet effet, la deuxième zone microstructurée 5c, 5d comprend une partie réfléchissante 8. Il peut s'agir d'une surface réfléchissante orientée perpendiculairement à la direction de propagation du rayonnement de positionnement, ou, comme cela représenté sur la figure 2, correspondre à une texture de la lame de phase prenant la forme d'un réseau échelette.

On a ainsi schématiquement représenté sur cette figure 2, à titre d'exemple, une représentation de la face principale 5a de la lame de phase 5 formant l'élément optique de l'exemple préféré de la figure 1. On reconnaît sur cette figure 2 la première zone microstructurée 5b comprenant une pluralité de sous zones disposées le long d'une direction principale de l'élément optique 5. Ces sous zones microstructurées sont représentées par les contours hachurés. La variation d'élévation, d'un point à l'autre d'une sous zone de la surface principale de la lame, affecte la distance de propagation du rayonnement qui s'y projette et conduit à modifier son profil transverse de phase spatiale.

La face principale 5a de l'élément optique 5 comprend également, dans l'exemple représenté, deux deuxièmes zones microstructurées 5c, 5d, disposées de part et d'autre de la première zone 5b. Chaque deuxième zone microstructurée 5c, 5d est destinée à recevoir et réfléchir le rayonnement lumineux de positionnement 6b. Chaque deuxième zone microstructurée 5c, 5d comprend une partie réfléchissante 8 et une pluralité de sous zone 8'. Les sous-zones 8' sont configurées pour au moins propager et rétro propager le rayonnement lumineux de positionnement 6b le long du deuxième chemin optique.

D'une manière générale, les sous zones de la première et de la deuxième zone microstructurée 5b, 5c, 5d sont toutes disposées sur la lame de phase 5 pour précisément correspondre aux zones interceptées par le rayonnement de positionnement 6b et le rayonnement incident 6a sur la face principale 5a de la lame de phase 5, lorsque l'étage d'entrée 3, l'élément optique 5 et, dans le cas de la configuration de la figure 1, le miroir 7 sont précisément disposés sur le support (c'est-à-dire parfaitement positionnés les uns par rapport aux autres pour rendre le dispositif optique 1 fonctionnel).

De plus, lorsque l'étage d'entrée 3, l'élément optique 5 et les éventuelles autres pièces optiques disposées le long du deuxième chemin optique sont tous précisément disposés sur le support 2, dans leurs positions de conception, le rayonnement de positionnement 6b est réfléchi par la partie réfléchissante 8 et donc rétro propagé sur le chemin optique 6b pour intercepter l'étage d'entrée 3, au niveau de l'extrémité d'émission des fibres optiques de positionnement 3a, 3d. Tout écart de positionnement ou d'orientation de l'un de ces éléments par rapport la position optimale, dévie la rétro propagation du rayonnement de positionnement 6b du chemin optique optimal ramenant aux fibres optiques de positionnement 3a, 3d. On collecte alors au niveau de ces fibres un signal rétro propagé présentant une puissance optique moindre que celle collectée lorsque toutes les pièces optiques sont précisément positionnées sur le support 2.

En d'autres termes, dans la position et dans l'orientation optimale des pièces optiques sur le support 2, le rayonnement de positionnement rétro propagé se couple optiquement aux fibres optiques de positionnement 3a, 3d dont il est issu et poursuit sa propagation à l'intérieur de cette fibre.

Comme cela sera exposé par la suite dans le détail, ce mécanisme peut être employé pour positionner précisément les pièces optiques disposées le long du deuxième chemin optique sur le support.

Il est particulièrement avantageux de disposer d'une pluralité de deuxième zones microstructurées 5c, 5d, distinctes les unes des autres. On peut ainsi améliorer la précision d'alignement des différentes pièces optiques, notamment vis-à-vis du positionnement angulaire de l'étage d'entrée 3 selon un axe correspondant à la direction d'injection des rayonnements. Chaque zone microstructurée est dans ce cas conçue pour recevoir un rayonnement de positionnement issu d'une fibre optique de positionnement qui lui est dédiée.

Avantageusement également, la (ou les) deuxième zone microstructurée 5c, 5d est disposée le long d'un bord de l'élément optique 5. On préserve ainsi la surface centrale de la face principale 5a de l'élément optique 5 pour la consacrer au traitement du rayonnement lumineux incident 6a. En effet, une meilleure précision de positionnement, notamment en rotation, est obtenue en disposant des deuxièmes zones microstructurées 5c, 5d de part et d'autre de la zone principale 5b. Pour améliorer la précision dans ce cas notamment, on choisira l'élément optique 5 pour que sa face principale soit aussi plane que possible, par exemple pour qu'elle présente une erreur de planéité inférieure à 100nm.

Comme on l'a vu, la deuxième zone microstructurée 5c, 5d peut comprendre, en complément de la partie réfléchissante 8, une pluralité de sous zones microstructurées 8' correspondant aux interceptions successives du deuxième chemin optique 6b avec l'élément optique 5. Les microstructures de ces sous-zones 8' sont conçues pour favoriser la dispersion du rayonnement lumineux de positionnement 6b lorsque, au contraire, les pièces optiques ne sont pas parfaitement positionnées entre elles. A ce titre, elles peuvent appliquer une transformation complexe. De plus, les microstructures des sous-zones 8' permettent également de façonner le front d'onde du rayonnement lumineux de positionnement pour qu'il soit plan, ou le plus plan possible, lorsqu'il se réfléchit au niveau de la partie réfléchissante 8, afin de favoriser cet effet réfléchissant et rétro propager le rayonnement de positionnement avec précision sur le deuxième chemin optique.

On forme alors un mécanisme de positionnement très sensible à tout écart d'alignement.

On note que les transformations opérées au niveau de chaque sous zone 8' au cours de la propagation le long du deuxième chemin optique s'appliquent de manière identique au cours de la rétro propagation du rayonnement, si bien que l'on retrouve au niveau de l'étage d'entrée 3 du dispositif 1 un rayonnement rétro propagé présentant un profil de phase identique à celui émis, dans la mesure où l'alignement des pièces optiques est parfaitement réalisé. Cela permet d'assurer le couplage de ce rayonnement lumineux rétro propagé à la fibre, par adéquation modale, et quelle que soit la transformation de mode réalisée le long du deuxième chemin optique 6b. De ce point de vue, il est avantageux, comme cela a été noté précédemment, que la (ou les) fibre de positionnement soit monomode.

Inversement, un écart de positionnement ou d'orientation d'une des pièces optiques disposées le long du deuxième chemin optique conduit à former au niveau de l'extrémité de la fibre de positionnement 3a, 3d un rayonnement dont le mode n'est plus parfaitement adapté à celui de la fibre (lorsqu'elle est monomode), ce qui limite sa faculté de couplage et la transmission de toute la puissance rétro propagée.

On comprend donc que l'invention permet à la fois de jouer sur la localisation précise du rayonnement rétro propagé vis-à-vis de la fibre de positionnement et sur les transformations de phases qui s'opèrent sur le trajet optique aller et retour pour permettre d'assembler précisément les pièces optiques au support 2.

Il n'est toutefois pas impératif que la deuxième zone microstructurée 5c, 5d de l'élément optique 5 dispose de sous zones texturées 8'. Celles-ci peuvent être remplacées par de simples réflexions, n'imposant dans ce cas aucune transformation de phase particulière, mais permettent toutefois de guider le rayonnement de positionnement 6b jusqu'au niveau de la partie réfléchissante 8.

Cette partie réfléchissante 8 et les sous zones réfléchissantes 8' ne sont pas nécessairement non plus disposés comme représentés sur la figure 2. Elles peuvent être bien distinctes des sous-zones de la première zone structurée 5b, les chevaucher en partie ou se chevaucher entre elles.

Que la deuxième zone structurée présente ou non des sous zones structurées 8', la partie réfléchissante 8 est préférentiellement disposée sur la face principale 5a de l'élément optique 5, du côté opposé à l'étage d'entrée. On profite alors des multiples réflexions qui se sont opérées sur le rayonnement optique qui tendent à amplifier toute déviation de positionnement pour rendre le mécanisme de position seulement très sensible. Toutefois, on pourrait prévoir que cette partie réfléchissante 8 soit positionnée à un autre endroit de la face principale 5a de l'élément optique 5. C'est notamment le cas lorsque l'élément optique comporte plusieurs deuxièmes zones texturées, chacune associée à un rayonnement de positionnement émis par une fibre distincte de l'étage d'entrée.

### Système d'assemblage et/ou de test

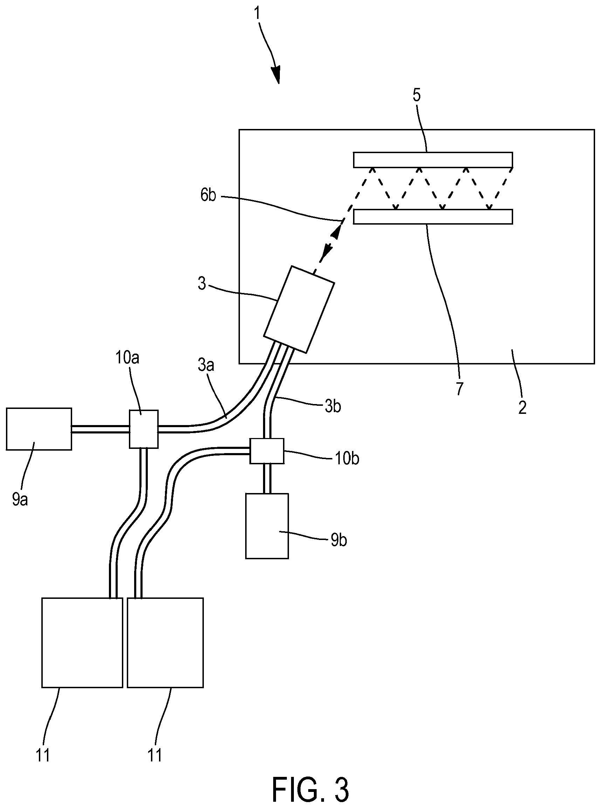

La figure 3 représente schématiquement en vue de dessus un système d'assemblage ou de test exploitant les moyens de positionnement qui viennent d'être décrits.

Au cours de l'assemblage du dispositif optique 1, on a disposé sur le support 2, qu'il soit formé d'un support plan ou d'un châssis, sans définitivement figer leurs positions ou leurs orientations, l'étage d'entrée 3, l'élément optique 5 et le miroir 7 (et d'une manière plus générale une partie au moins des éléments optiques composant le dispositif 1). Les fibres optiques de positionnement 3a, 3d de l'étage d'entrée 3 sont reliés à des sources de lumière, par exemple des lasers ou des diodes superluminescentes 9a, 9b permettant d'injecter dans la cavité multi passage ce rayonnement de positionnement 6b.

Entre la source de lumière 9a, 9b et l'étage d'entrée 3 on a placé un circulateur 10a, 10b pour extraire des fibres optiques 3a, 3d les rayonnements lumineux rétro propagés et pour les diriger respectivement vers un dispositif de mesure 11 de puissance ou d'intensité de ce rayonnement, tel qu'un puissance mètre optique. Alternativement à un circulateur, on peut prévoir de placer un séparateur fibré 12 entre la source de lumière et l'étage d'entrée.

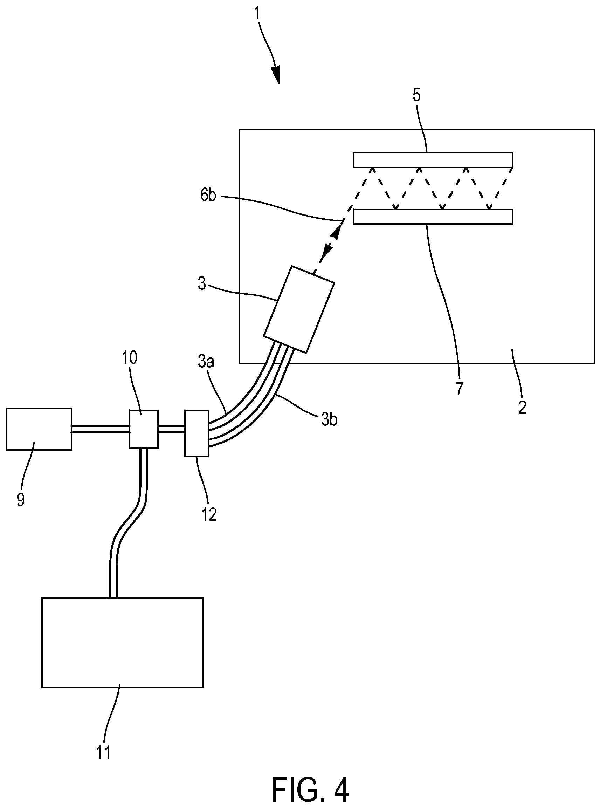

Lorsque le dispositif optique 1 comprend plusieurs fibres optiques de positionnement 3a, 3d, composant un rayonnement lumineux de positionnement se propageant sur plusieurs zones texturées réfléchissantes 5b, 5c distinctes de l'élément optique 5, on peut choisir de mesurer séparément le rayonnement rétro propagé recueilli au niveau de chaque fibre de positionnement, comme cela est représenté sur la figure 3. On peut également choisir, par souci de simplification du système, de combiner optiquement les rayonnements de positionnement rétro propagés collectés par les fibres optiques de positionnement, par exemple à l'aide d'un séparateur fibré 12 disposé entre un circulateur 10 et l'étage d'entrée 3, ou par un simple séparateur disposé entre la source de lumière et l'étage d'entrée et de procéder à la mesure de ce rayonnement lumineux combiné. Cette configuration est représentée sur la figure 4, et permet également d'employer une unique source de lumière 10.

Dans ce cas, on prendra soin de choisir une source de lumière 9 émettant des rayonnements dont la longueur de cohérence est inférieure à la longueur du chemin optique séparant cette source 9 du dispositif de mesure 11. On évite de la sorte de faire interférer entre eux les rayonnements combinés.

D'autres configurations sont bien entendu possibles, combinant une ou une pluralité de source de lumière 9, un ou des circulateurs 10, un ou des séparateurs fibrés 12 dont le nombre de voies en entrée et en sortie peut être choisi librement.

### Procédé d'évaluation, d'assemblage et/ou de test

À l'aide du système représenté sur la figure 3, la présente invention propose un procédé d'évaluation très précis du dispositif optique 1.

Selon ce procédé, on place temporairement, sans les figer, les pièces optiques interceptant le premier chemin optique 6a relativement les unes aux autres, en les maintenant par exemple à l'aide de pinces manipulatrices de maintien sur le support 2. Ces pièces comprennent au moins l'étage d'entrée 3 et l'élément optique 5. Dans le cas de la configuration préférée de la figure 1 et 3, les pièces comprennent également le miroir 7.

Ce positionnement est grossier, c'est-à-dire qu'il vise à placer les pièces dans une position et une orientation optimale qu'il n'est généralement pas possible d'atteindre, à cause du dimensionnement imprécis des pièces liées à leurs tolérances de fabrication et à l'imprécision de positionnement et d'orientation sur le support 2.

La source 9 ou les sources de lumière 9a, 9b sont activées et on injecte le rayonnement de positionnement 6b par l'intermédiaire de l'étage d'entrée 3.

A l'aide du dispositif de mesure 11, on mesure la puissance du rayonnement rétro propagé. Un opérateur ou un équipement de positionnement ajuste le placement relatif des pièces optiques (position et orientation), par exemple en manipulant les pinces de maintien, et on cherche à obtenir une mesure de puissance atteignant ou dépassant une mesure cible. Cette mesure cible peut être une mesure fixée à l'avance, en valeur absolue de la puissance, ou le maximum de puissance mesurée pour tous les positionnements relatifs balayés au cours de cette étape. La mesure cible peut également s'exprimer comme une valeur relative entre la puissance du rayonnement de positionnement injecté et la puissance du rayonnement rétro propagé.

Une fois le positionnement et l'orientation déterminés des pièces placées dans leur disposition fournissant ou excédant cette mesure cible, on fige les pièces optiques sur le support 2, par exemple par collage. Comme on l'a vu, cette étape de fixation peut comprendre l'utilisation de cubes ou de pièces d'alignement permettant de figer la position et l'orientation déterminée en mettant en contact plan la surface du support 2, un ou plusieurs pièces d'alignement et une surface plane d'assemblage de la pièce à fixer au support 2.

On note que, pour faciliter l'assemblage, une des pièces optiques peut être figée préalablement au support 2, par exemple par collage, au cours de l'étape de placement temporaire. Le procédé d'assemblage cherche alors à positionner les autres pièces optiques relativement à celle-ci. Il peut s'agir notamment de l'élément optique 5.

On note également que l'utilisation du procédé selon l'invention permet un montage très précis du dispositif 1, car la même fibre de positionnement injecte et collecte le rayonnement de positionnement et le rayonnement rétro propagé. Toute déviation, même de faible amplitude, du positionnement ou d'orientation d'une des pièces, affecte la propagation du rayonnement rétro propagé et la puissance de ce rayonnement collecté au niveau de l'étage d'entrée 3. Cette mesure très sensible assure le positionnement très précis des pièces assemblées.

Après son assemblage complet, notamment après avoir également assemblé l'étage de sortie 4 au support 2, lorsque cela est nécessaire, le dispositif optique 1 est conventionnellement placé dans un boîtier pour le préserver de l'environnement extérieur et assurer sa robustesse.

Selon un aspect avantageux de l'invention, le boîtier peut être muni de points d'accès dédiés à la fibre ou aux fibres de positionnement 3a, 3d. On peut alors, à l'aide du même système représenté sur la figure 3 ou sur la figure 4, procéder au test de bon fonctionnement de ce dispositif 1, pour s'assurer par exemple que son transport, son installation, son exposition à des excursions thermiques, n'ont pas affecté son fonctionnement, par déplacement des pièces optiques sur le support 2.

La mesure de la puissance du rayonnement rétro propagé, et plus précisément l'établissement de la valeur relative entre la puissance du rayonnement de positionnement injecté et la puissance du rayonnement rétro propagé, permet de déterminer l'état de fonctionnement du dispositif. Cette étape peut par exemple être fondée sur l'atteinte d'une valeur relative cible ou d'une proportion de cette valeur relative cible. La valeur cible peut alternativement correspondre à la mesure de la puissance déterminée au moment du montage, et associée spécifiquement au dispositif en question.

Bien entendu l'invention n'est pas limitée au mode de mise en œuvre décrit et on peut y apporter des variantes de réalisation sans sortir du cadre de l'invention tel que défini par les revendications.

Bien que l'on ait indiqué que les interfaces d'assemblage étaient formées par la mise en contact plan de deux pièces plane entre elles, l'invention prévoit de renforcer leur adhésion par l'ajout d'une colle ou d'une couche adhésive qui peut être formée avant l'étape d'assemblage ou introduit entre les deux faces en contact, après leur assemblage.

Par ailleurs, l'élément optique 5 n'est pas nécessairement constitué d'une lame de phase, il peut d'agir d'un miroir déformable, un modulateur spatial de lumière (généralement désigné par l'acronyme SLM selon la dénomination anglo-saxonne « Spatial Light Modulator »), ou tout autre moyen pour impartir une transformation contrôlée de la phase d'un rayonnement lumineux.

On note que l'étage d'entrée 3 peut être composé d'une pluralité de bloc indépendants, certains de ces blocs permettant d'injecter le rayonnement de positionnement et d'autres d'injecter le rayonnement incident. Un étage d'entrée 3 portant une fibre de positionnement peut également porter une fibre d'extraction du rayonnement transformé, et donc constituer également un étage de sortie. On peut également envisager qu'une pluralité de fibres de positionnement soit portées par des blocs indépendants de l'étage d'entrée 3, ou par une pluralité d'étages d'entrée 3.

On rappelle également que le rayonnement incident et le rayonnement transformé peuvent être respectivement injectés et extraits du dispositif 1 par simple propagation en espace libre. Dans ce cas, l'étage d'entrée ne porte que les fibres de positionnement.

Il n'est pas nécessaire non plus que le rayonnement lumineux de positionnement soit distinct du rayonnement lumineux incident. Il est possible d'utiliser une portion du rayonnement incident comme rayonnement de positionnement.

Dans toutes les configurations envisageables toutefois, au moins un rayonnement de positionnement se propage, est réfléchi et se rétropropage le long d'un chemin optique, pour permettre le positionnement d'une partie au moins des pièces optiques constituant dispositif 1.

Les matériaux composant les différentes pièces formant la cavité sont avantageusement les mêmes, de manière à limiter les contraintes d'origine thermique pouvant s'appliquer au niveau des interfaces d'assemblage. Il peut notamment s'agir de silicium, de verre, de quartz.

## Revendications

1. Dispositif optique (1) formé d'une pluralité de pièces optiques disposée sur un support (2) dont au moins un élément optique (5) présentant une face principale (5a) munie d'une première zone microstructurée (5b) pour intercepter un rayonnement lumineux incident qui se propage le long d'un premier chemin optique (6a) déterminé, la première zone microstructurée (5b) modifiant spatialement la phase du rayonnement lumineux incident selon un profil spatial déterminé et pour former, par une pluralité de réflexions ou de transmissions sur le ou les élément(s) optique(s) (5), un rayonnement lumineux transformé, le dispositif optique (1) étant **caractérisé en ce qu'**il comprend un étage d'entrée (3) pour guider l'injection d'un rayonnement lumineux de positionnement, selon un deuxième chemin optique (6b), et **en ce que** la surface principale (5a) de l'élément optique (5) comporte une deuxième zone microstructurée (5c, 5d) configurée pour réfléchir le rayonnement lumineux de positionnement et rétro propager le rayonnement de positionnement le long du deuxième chemin optique (6b).

2. Dispositif optique (1) selon la revendication précédente comprenant un étage de sortie (4) du rayonnement lumineux transformé.

3. Dispositif optique (1) selon l'une des revendications précédentes dans lequel le rayonnement lumineux incident est injecté par l'étage d'entrée (3).

4. Dispositif optique (1) selon l'une des revendications précédentes dans lequel l'élément optique est transparent au rayonnement lumineux incident, et dans lequel le rayonnement transformé est formé, au moins en partie, par transmission du rayonnement incident à travers l'élément optique (5) transparent.

5. Dispositif optique (1) selon l'une des revendications précédentes dans lequel l'élément optique (5) est réfléchissant, et dans lequel le rayonnement transformé est formé, au moins en partie, par réflexion du rayonnement lumineux incident sur l'élément optique réfléchissant (5).

6. Dispositif optique (1) selon la revendication précédente comprenant un miroir disposé en vis-à-vis de l'élément optique (5) réfléchissant pour former une cavité multi passage et permettre de projeter une pluralité de fois le rayonnement lumineux incident et le signal lumineux de positionnement respectivement le long du premier (6a) et du deuxième chemin optique (6b).

7. Dispositif optique (1) selon l'une des revendications précédentes dans lequel la deuxième zone microstructurée (5b, 5c) est configurée pour appliquer une transformation au rayonnement de positionnement au cours des réflexions ou des transmissions précédant la réflexion de rétro-propagation.

8. Dispositif optique (1) selon l'une des revendications précédentes dans lequel l'élément optique (5) est une lame de phase, un miroir déformable, ou un modulateur spatial de lumière.

9. Dispositif optique (1) selon l'une des revendications précédentes dans lequel le support (2) est un support plan ou un châssis.

10. Dispositif optique (1) selon l'une des revendications précédentes dans lequel l'étage d'entrée (3) comprend au moins une fibre optique de positionnement (3a, 3d) pour injecter le rayonnement de positionnement.

11. Système d'assemblage ou de test d'un dispositif optique (1) conforme à la revendication précédente, le système comprenant ledit dispositif optique, une source de lumière (9 ; 9a, 9b) optiquement reliée à la fibre optique de positionnement (3a, 3d) et un dispositif de mesure (11) de la puissance du rayonnement lumineux rétro propagé.

12. Système d'assemblage ou de test selon la revendication précédente comprenant un circulateur (10 ; 10a, 10b) et/ou un séparateur (12) entre la source de lumière (9 ; 9a, 9b) et la fibre optique de positionnement (3a, 3d) pour extraire le rayonnement lumineux rétro propagé vers le dispositif de mesure (11).

13. Procédé d'évaluation d'un dispositif optique (1) conforme à l'une des revendications 1 à 10, le procédé comprenant les étapes suivantes :
a. injecter un rayonnement lumineux de positionnement dans le dispositif optique (1) par l'intermédiaire de l'étage d'entrée (3);
b. mesurer la puissance du signal rétro propagé ;
c. déterminer l'état de fonctionnement du dispositif optique (1) selon la valeur de la puissance mesurée.

14. Procédé d'évaluation selon la revendication 13, le procédé comprenant une étape visant à placer temporairement les pièces optiques relativement les unes par rapport aux autres, avant d'injecter le rayonnement lumineux de positionnement.

15. Procédé d'évaluation selon la revendication précédente comprenant :
a. une étape d'ajustement du placement relatif des pièces optiques pour atteindre une mesure cible de la puissance ou pour maximiser la mesure de la puissance et établir une position et une orientation déterminées ;
b. une étape pour figer le placement relatif des pièces optiques entre elles dans la position et l'orientation déterminées ;
une étape de fixation définitive de l'élément optique (5) sur un support plan.

## Patentansprüche

1. Optische Vorrichtung (1), die aus einer Vielzahl von auf einem Träger (2) angeordneten optischen Teilen gebildet ist, von denen mindestens ein optisches Element (5) eine Hauptoberfläche (5a) aufweist, die mit einem ersten mikrostrukturierten Bereich (5b) zum Abfangen einer einfallenden Lichtstrahlung versehen ist, die sich entlang eines ersten bestimmten optischen Wegs (6a) ausbreitet, wobei der erste mikrostrukturierte Bereich (5b) die Phase der einfallenden Lichtstrahlung gemäß einem bestimmten räumlichen Profil räumlich verändert, und zum Bilden einer transformierten Lichtstrahlung über eine Vielzahl von Reflexionen oder Transmissionen an dem oder den optischen Element(en) (5), wobei die optische Vorrichtung (1) **dadurch gekennzeichnet ist, dass** sie eine Eingangsstufe (3) zum Führen der Einkopplung einer Positionierungslichtstrahlung entlang eines zweiten optischen Wegs (6b) enthält und dass die Hauptoberfläche (5a) des optischen Elements (5) einen zweiten mikrostrukturierten Bereich (5c, 5d) umfasst, der dazu eingerichtet ist, die Positionierungslichtstrahlung zu reflektieren und die Positionierungsstrahlung entlang des zweiten optischen Wegs (6b) zurück auszubreiten.

2. Optische Vorrichtung (1) nach dem vorhergehenden Anspruch, die eine Ausgangsstufe (4) der transformierten Lichtstrahlung enthält.

3. Optische Vorrichtung (1) nach einem der vorhergehenden Ansprüche, wobei die einfallende Lichtstrahlung durch die Eingangsstufe (3) eingekoppelt wird.

4. Optische Vorrichtung (1) nach einem der vorhergehenden Ansprüche, wobei das optische Element die einfallende Lichtstrahlung durchlässt und wobei die transformierte Strahlung zumindest teilweise durch Transmission der einfallenden Strahlung durch das lichtdurchlässige optische Element (5) gebildet wird.

5. Optische Vorrichtung (1) nach einem der vorhergehenden Ansprüche, wobei das optische Element (5) reflektierend ist und wobei die transformierte Strahlung zumindest teilweise durch Reflexion der auf das reflektierende optische Element einfallenden Lichtstrahlung (5) gebildet wird.

6. Optische Vorrichtung (1) nach dem vorhergehenden Anspruch, enthaltend einen Spiegel, der dem reflektierenden optischen Element (5) so gegenüber angeordnet ist, dass ein Hohlraum mit mehreren Durchgängen gebildet wird und die einfallende Lichtstrahlung und das Positionslichtsignal jeweils eine Vielzahl von Malen entlang des ersten (6a) und des zweiten optischen Wegs (6b) projiziert werden.

7. Optische Vorrichtung (1) nach einem der vorhergehenden Ansprüche, wobei der zweite mikrostrukturierte Bereich (5b, 5c) dazu eingerichtet ist, die Positionierungsstrahlung während der Reflexionen oder der der Reflexion der Zurückausbreitung vorausgehenden Transmissionen einer Transformation zu unterziehen.

8. Optische Vorrichtung (1) nach einem der vorhergehenden Ansprüche, wobei das optische Element (5) eine Phasenplatte, ein verformbarer Spiegel oder ein räumlicher Lichtmodulator ist.

9. Optische Vorrichtung (1) nach einem der vorhergehenden Ansprüche, wobei der Träger (2) ein flacher Träger oder ein Gestell ist.

10. Optische Vorrichtung (1) nach einem der vorhergehenden Ansprüche, wobei die Eingangsstufe (3) mindestens eine optische Positionierfaser (3a, 3d) zum Einkoppeln der Positionierungsstrahlung enthält.

11. System zum Montieren oder Testen einer optischen Vorrichtung (1) nach dem vorhergehenden Anspruch, wobei das System die optische Vorrichtung, eine optisch mit der optischen Positionierfaser (3a, 3d) verbundene Lichtquelle (9; 9a, 9b) und eine Messvorrichtung (11) zum Messen der Leistung der zurück ausgebreiteten Lichtstrahlung enthält.

12. System zum Montieren oder Testen nach dem vorhergehenden Anspruch zum Ablenken der zurück ausgebreiteten Lichtstrahlung in Richtung der Messvorrichtung (11) zwischen der Lichtquelle (9; 9a, 9b) und der optischen Positionierfaser (3a, 3d) einen Zirkulator (10; 10a, 10b) und/oder einen Separator (12) enthaltend.

13. Verfahren zum Bewerten einer optischen Vorrichtung (1) nach einem der Ansprüche 1 bis 10, das Verfahren die folgenden Schritte enthaltend:
a. Einkoppeln der Positionierungslichtstrahlung in die optische Vorrichtung (1) mittels der Eingangsstufe (3);
b. Messen der Leistung des zurück ausgebreiteten Signals;
c. Bestimmen des Betriebszustands der optischen Vorrichtung (1) gemäß dem Wert der gemessenen Leistung.

14. Bewertungsverfahren nach Anspruch 13, das Verfahren einen Schritt zum temporären Anordnen der optischen Teile zueinander vor dem Einkoppeln der Positionierungslichtstrahlung enthaltend.

15. Bewertungsverfahren nach dem vorhergehenden Anspruch, enthaltend:
a. einen Schritt der Anpassung der relativen Platzierung der optischen Teile derart, dass ein Sollleistungsmesswert erreicht oder der Leistungsmesswert maximiert wird und eine bestimmte Position und Ausrichtung eingestellt wird;
b. einen Schritt zum Feststellen der relativen Platzierung der optischen Teile in der bestimmten Position und Ausrichtung;
einen Schritt des endgültigen Fixierens des optischen Elements (5) auf einem ebenen Träger.

## Claims

1. Optical device (1) formed of a plurality of optical parts arranged on a support (2), at least one optical element (5) of which has a main face (5a) provided with a first microstructured region (5b) for intercepting incident light radiation which propagates along a first determined optical path (6a), the first microstructured region (5b) spatially modifying the phase of the incident light radiation according to a determined spatial profile, and for forming transformed light radiation by means of a plurality of reflections or transmissions on the optical element(s) (5), the optical device (1) being **characterized in that** it comprises an input stage (3) for guiding the injection of positioning light radiation, along a second optical path (6b), and **in that** the main surface (5a) of the optical element (5) comprises a second microstructured region (5c, 5d) designed to reflect the positioning light radiation and back-propagate the positioning radiation along the second optical path (6b).

2. Optical device (1) according to the preceding claim, comprising an output stage (4) for the transformed light radiation.

3. Optical device (1) according to either of the preceding claims, wherein the incident light radiation is injected via the input stage (3).

4. Optical device (1) according to any of the preceding claims, wherein the optical element is transparent to the incident light radiation, and wherein the transformed radiation is formed, at least in part, by transmitting the incident radiation through the transparent optical element (5).

5. Optical device (1) according to any of the preceding claims, wherein the optical element (5) is reflective, and wherein the transformed radiation is formed, at least in part, by reflecting the incident light radiation on the reflective optical element (5).

6. Optical device (1) according to the preceding claim, comprising a mirror arranged opposite the reflective optical element (5) in order to form a multi-passage cavity and allow the incident light radiation and the positioning light signal to be projected along the first optical path (6a) and the second optical path (6b), respectively, a plurality of times.

7. Optical device (1) according to any of the preceding claims, wherein the second microstructured region (5b, 5c) is designed to apply a transformation to the positioning radiation during the reflections or the transmissions preceding the back-propagation reflection.

8. Optical device (1) according to any of the preceding claims, wherein the optical element (5) is a phase plate, a deformable mirror, or a spatial light modulator.

9. Optical device (1) according to any of the preceding claims, wherein the support (2) is a flat support or a frame.

10. Optical device (1) according to any of the preceding claims, wherein the input stage (3) comprises at least one positioning optical fiber (3a, 3d) for injecting the positioning radiation.

11. System for assembling or testing an optical device (1) according to the preceding claim, the system comprising said optical device, a light source (9; 9a, 9b) optically connected to the positioning optical fiber (3a, 3d), and a device (11) for measuring the power of the back-propagated light radiation.

12. Assembly or test system according to the preceding claim, comprising a circulator (10; 10a, 10b) and/or a separator (12) between the light source (9; 9a, 9b) and the positioning optical fiber (3a, 3d) in order to extract the back-propagated light radiation toward the measuring device (11).

13. Method for evaluating an optical device (1) according to any of claims 1 to 10, the method comprising the following steps:
a. injecting positioning light radiation into the optical device (1) via the input stage (3);
b. measuring the power of the back-propagated signal;
c. determining the operating state of the optical device (1) on the basis of the measured power value.

14. Evaluation method according to claim 13, the method comprising a step of temporarily placing the optical parts relative to one another before injecting the positioning light radiation.

15. Evaluation method according to the preceding claim, comprising:
a. a step of adjusting the relative placement of the optical parts in order to achieve a target measurement of the power or to maximize the measurement of the power and establish a determined position and orientation;
b. a step for fixing the relative placement of the optical parts with respect to one another in the determined position and orientation;
a step of permanently fixing the optical element (5) on a flat support.
